# EUROPEAN PATENT APPLICATION

(11) **EP 1 684 173 A1**
(43) Date of publication of application: **26.07.2006**
(21) Application number: 05112491.5
(22) Date of filing: 20.12.2005
(51) Int. Cl.: G06F 9/445, G06F 9/46

(54) **Bus abstraction system and method for unifying device discovery and message transport in multiple bus implementations and networks**

(30) Priority: 30.12.2004 US 26190
(71) Applicant: MICROSOFT CORPORATION, Redmond, Washington 98052-6399 (US)
(72) Inventor: Sather, Dale A., 98052, Redmond (US); Backman, Terje Kristian, 98052, Redmond (US); Kuehnel, Thomas W., 98052, Redmond (US)
(74) Representative: Zimmer, Franz-Josef

(57) **Abstract**

Systems and methodologies that facilitate a unification of bus protocols and networks *via* an abstraction system that can bind device models and higher level protocols to multiple bus implementations. Such abstraction system can provide a common language among buses for message transfers according to priority ― *e.g*., semantics provided for a messaging transport component for control messages, a streaming component for high priority, and a bulk transfer component for low priority. In addition, a discovery component can identify devices on a bus or network, with an association component for determining a trust established therebetween and authenticating the devices or services.

## Description

### TECHNICAL FIELD

The subject invention relates generally to networks and bus systems, and in particular to a programming model of bus abstraction among protocol buses and/or networks, for a unification thereof.

### BACKGROUND OF THE INVENTION

Increasing advances in computer technology (*e.g.*, microprocessor speed, memory capacity, data transfer bandwidth, software functionality, and the like) have generally contributed to increased computer application in various industries. Ever more powerful server systems, which are often configured as an array of servers, are commonly provided to service requests originating from external sources such as the World Wide Web, for example. In such network environments, a plurality of bus standards can be employed for interfacing peripherals and devices to computers. For example, a Universal Serial Bus (USB) having its own protocol, which supports three transmission speeds of 1.5, 12, and 480 mpbs, can be employed for USB devices with different data speed requirements. Also, communication software and hardware within the host computer can mediate the connection between the communications network and the Universal Serial Bus. Like many conventional protocols, the USB protocol is a layered protocol comprising a number of layers. One such layer is a physical layer which defines the electrical specifications of the Universal Serial Bus. Another layer is a data link layer which defines the types of transactions permissible on the Universal Serial Bus (*i.e.,* the formats of the USB transactions).

Another bus protocol, IEEE1394 is similar to the USB standard, which is available in today's personal computers, in that many of the devices one connects *via* USB today can also be connected *via* IEEE1394 (provided the device supports IEEE 1394). In addition, IEEE1394's support for isochronous transactions is ideal for the connection of devices that send a fixed amount of data in each transaction, where the transactions are equally spaced apart. There are a number of layers in the IEEE1394 protocol model, such as the physical layer that interacts heavily with the link layer, which is responsible for setting up the software driver requests into valid IEEE1394 packets to be sent across the wire. In addition, the bus management layer depends heavily on the physical layer for correct operation, this layer is responsible for: assembling bus arbitration packets to detect and prevent multiple users on the bus, for tuning the bus speed, and for controller isochronous transfer times.

In addition, emerging networking technologies such as; Peripheral Component Interface (PCI) express and Ultra Wide Band (UWB) are increasingly employed to connect peripherals inside and outside a computer chassis. Accordingly, the clear distinction between internal bus and external bus can diminish due to the ever increasing data rates of new connection technologies. New properties such as capacity aggregation and reservation protocols as well as intermittent connectivity and changing topologies in Wireless environments bear new challenges for the middleware layers as applications that traditionally evolve in a slower pace and rely on existing APIs.

Moreover, wireless networking technologies such as Bluetooth or UWB are typically used to connect mobile battery powered devices. As such power management is an important feature that has to be supported by the bus management layer. Likewise, data has to be buffered until the remote device wakes up.

At the same time, there exists a discord between conventional bus protocols and Internet Protocol (IP). For example, in general such bus protocols and their related programming models are typically bus specific and do not provide services such as access to the Internet. Moreover, IP typically is not enabled to leverage signaling capabilities of buses such as isochronous transfer, clock synchronization, discovery and the like.

Therefore, there is a need to overcome the aforementioned exemplary deficiencies associated with conventional systems and devices.

### SUMMARY OF THE INVENTION

The following presents a simplified summary of the invention in order to provide a basic understanding of one or more aspects of the invention. This summary is not an extensive overview of the invention. It is intended to neither identify key or critical elements of the invention, nor to delineate the scope of the subject invention. Rather, the sole purpose of this summary is to present some concepts of the invention in a simplified form as a prelude to the more detailed description that is presented hereinafter.

The subject invention provides for systems and methods that facilitate a unification of bus protocols and networks via an abstraction system that can bind device models (*e.g.*, device specific applications that communicate with the device) and/or services and also higher level protocols, to multiple bus implementations. The abstraction of the subject invention can express the semantics of existing bus protocols. As part of such an abstraction, programming models can be implemented that include semantics for a discovery component, a messaging transport component, and an association component.

The discovery component can permit devices attached to a bus and/or network, to provide a signaling mechanism for a discovery of such devices. The messaging transport component can provide for the ability to transfer messages, such as control messages of medium priority that typically are required to transfer rapidly to maintain a substantially good control of the various devices. Similarly, the association component can determine a trust established and the relation among various devices of the buses. The association component can further authenticate devices and/or services by employing credentials previously established, such as challenge response protocol methods or public key infrastructure. Moreover, the messaging transport component can perform encryption to assure privacy of communication, and can be operatively connected to the association component.

In a related aspect of the subject invention, an addressing scheme can also be employed for specifying the application program interface (API), and the devices that communication thereto is desired, wherein the bus abstraction system can act as an interface. Accordingly, such addressing component can provide a standard way for the various applications to refer to the devices on the bus or network. Moreover, semantics can be provided for: a streaming component, a bulk transfer component and a clock synchronization component. The streaming component can typically satisfy latency requirements and delivery of time sensitive information in a reliable manner. Like wise, the bulk transfer component can facilitate transfer of low priority items and messages without impacting the operation of the messaging transport component and the streaming component. The clock synchronization component can facilitate distribution of high accuracy clock across the bus, for example by employing a respective clock synchronization that each bus naturally implements, so that devices can synchronize or that they have some time base that will be shared with respect to that bus.

The subject invention can facilitate, interaction between an application that is unfamiliar with a bus technology with that bus. As such, the application can employ the bus and interact therewith, without typically knowing the specifics of the bus technology. In a related aspect, such abstraction can be positioned over a network, to treat the network as a bus, so that applications interacting with devices on networks can employ the same abstraction for communication. For example, the abstraction system can serve as a common language between devices that communicate over various networks, between applications and buses, between processes on a computer, and the like.

In a further aspect of the invention, in a protocol based bus technology, such as a USB, IEEE1394 and the like, the abstraction system can be implemented via an adaptation component that is associated with each bus technology. Such adaptation component can enable a bus or a network to implement the abstraction system of the subject invention, wherein from the application side the bus abstraction can appear uniform, even though the adaptation components can operate differently for a particular bus technology. Such an arrangement can encourage re-use of device specific applications and device drivers across multiple bus technologies, which can permit leverage of intellectual investment in a single device model across a plurality of such bus technologies.

In a further aspect of the subject invention, typically no change to wire protocols of existing buses is required, as such devices are currently bound to their respective buses, *e.g.*, the invention serves as programming model for the implementation of existing device models. Accordingly, a single application program interface (API) can be provided to send messages over a plurality of different buses, and support a device class, regardless of the bus type or protocol.

Moreover, a bus driver can expose an abstraction in accordance with another aspect of the invention. In terms of layering, such driver can be positioned below a driver that understands a bus hardware involved for a particular machine. Such a model can provide for an easy to use abstraction for networks, as well as a stable programming model under which networking protocols can evolve without requiring applications to be modified. Moreover, in a context of inter process communication, the invention can allow clients and services to exploit rich transport capabilities easily, regardless of location. It is to be appreciated that other properties of the wireless medium, such as varying channel characteristics that can result in changing data rates or even changing topologies, can be compensated by balancing resources among the various connections.

In yet a further aspect of the subject invention, the bus abstraction, when applied to driver models allows the unification of protocol buses and load/store buses (*e.g.*, CPI). Accordingly, device class support can be shared among, load/store buses, protocol buses and Internet Protocol (IP) connected devices.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention may be employed. Other aspects, advantages and novel features of the invention will become apparent from the following detailed description of the invention when considered in conjunction with the drawings.

### BRIEF DESCRIPTION OF THE DRAWINGS

Fig. 1 illustrates a schematic block diagram of an abstraction system that can bind applications to a plurality of bus implementations and networking technologies, according to an aspect of the invention.

Fig. 2 illustrates a plurality of buses that interact with an abstraction system in accordance with an aspect of the subject invention via adaptation components.

Fig. 3 illustrates various subcomponents associated with the abstraction system that can include semantics for a discovery component, a messaging transport component, and an association component.

Fig. 4 illustrates additional subcomponents associated with the abstraction system according to a related aspect of the subject invention.

Fig. 5 illustrates a particular layering arrangement in accordance with an aspect of the subject invention.

Fig. 6 illustrates a methodology of bus abstraction in accordance with an aspect of the subject invention.

Fig. 7 illustrates a brief, general description of a suitable computing environment wherein the various aspects of the subject invention can be implemented

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention may be practiced without these specific details. In other instances, well-known structures and devices are shown in block diagram form in order to facilitate describing the subject invention.

As used in this application, the terms "component," "handler," "model," "system," and the like are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components can communicate *via* local and/or remote processes, such as: in accordance with a signal having one or more data packets (*e.g.*, data from one component interacting with another component in a local system, distributed system, and/or across a network for example the Internet with other systems *via* the signal).

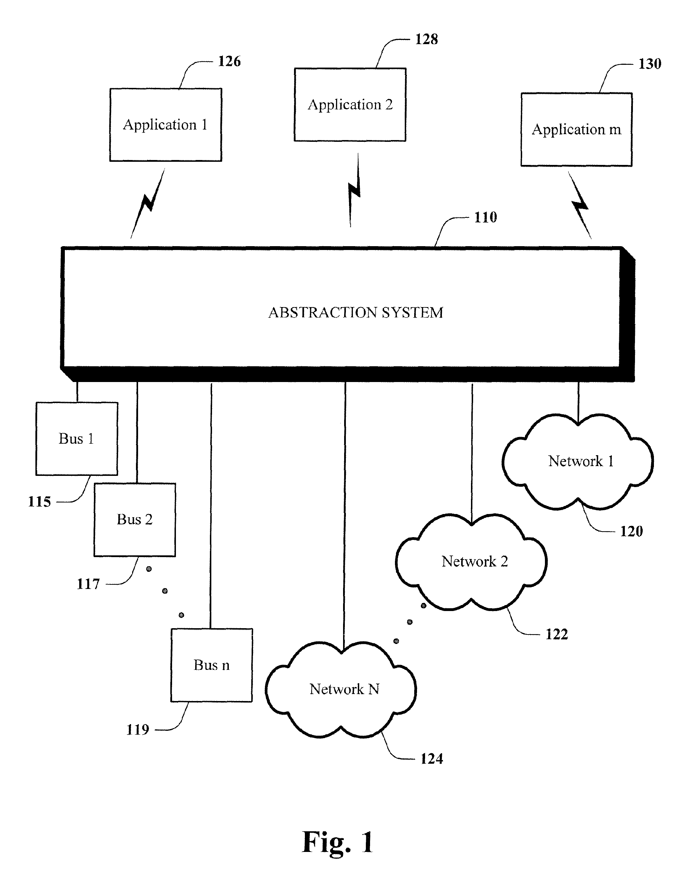

The subject invention provides for systems and methods that facilitate a unification of bus protocols and networks via an abstraction system that can bind device specific applications and higher level protocols to multiple bus implementations. Referring initially to Fig. 1, an abstraction system 110 is illustrated that can function as a single application program interface (API) to send messages over a plurality of different buses 115, 117, 119 (1 to n, n being an integer), or networks 120, 122, 124 (1 to N, N being an integer), and support a device class, regardless of the bus type or protocol. For example, such abstraction system 110 can specify a manner applications 126, 128, 130 (1 to m, m being an integer) unfamiliar with bus technologies 115-119 can employ the bus(es) and/or networks and interact therewith, without typically knowing the specifics of the bus or network technology.

As illustrated, the buses 115-119 can employ a protocol based bus technology such as a Universal Serial Bus (USB), IEEE1394 and the like, *e.g.*, bus system 115 can be a USB bus. Typically, such USB 115 can be an external bus architecture that for example connects external peripheral devices to a host computer (not shown). The USB bus 115 can function as a communication capable peripherals protocol that supports serial data transfer between a host system and USB - capable peripherals. In addition, the USB system can be composed of a host side and a device side. Both sides are connected via the physical bus of which the USB cable is a part of Typically, the basic responsibility of such host can be to supply a control interface for data transfer, whereas the device side can provide the user with various functions. The host side itself can consist of a USB adapter or USB host controller hardware layer and an upper-level system software layer. The host controller can, for example be responsible for transferring streams of data between the host and USB devices. The host controller can provide services based on parameters provided by the host software, when for example a configuration is made.

For example, the system software for USB can consist of two layers. The top layer can consist of USB device drivers. Such drivers can establish a connection to the device they control and use the USB system software functions to configure and communicate with the device. Similarly, the bottom layer can consist of the USB system software that performs various tasks such as manage communications between USB device drivers and a host computer, load and unload device drivers at the appropriate times, translate data to and from the USB's protocol frame and packet formats.

Likewise, the network 120-124 illustrated in Fig. 1, can be a system area network or other type of network, and can include several hosts, (not shown), which may be personal computers, servers or other types of computers. Such host generally can be capable of running or executing one or more application-level (or user-level) programs, as well as initiating an I/O request (*e.g.*, I/O reads or writes). In addition, the networks can further include one or more input/output units (I/O units), wherein such I/O units can includes one or more I/O controllers connected thereto, and each of the I/O can be any of several types of I/O devices, such as storage devices (e.g., a hard disk drive, tape drive) or other I/O device. The hosts and I/O units and their attached I/O controllers and devices can be organized into groups such as clusters, with each cluster including one or more hosts and typically one or more I/O units (each I/O unit including one or more I/O controllers). The hosts and I/O units can be interconnected via a collection of routers, switches and communication links (such as wires, connectors, cables, and the like) that connects a set of nodes (e.g., connects a set of hosts and I/O units) of one or more clusters. As such, the abstraction system 110 can serve as a common language between devices that communicate over various networks, between applications and buses, between processes on a computer and the like.

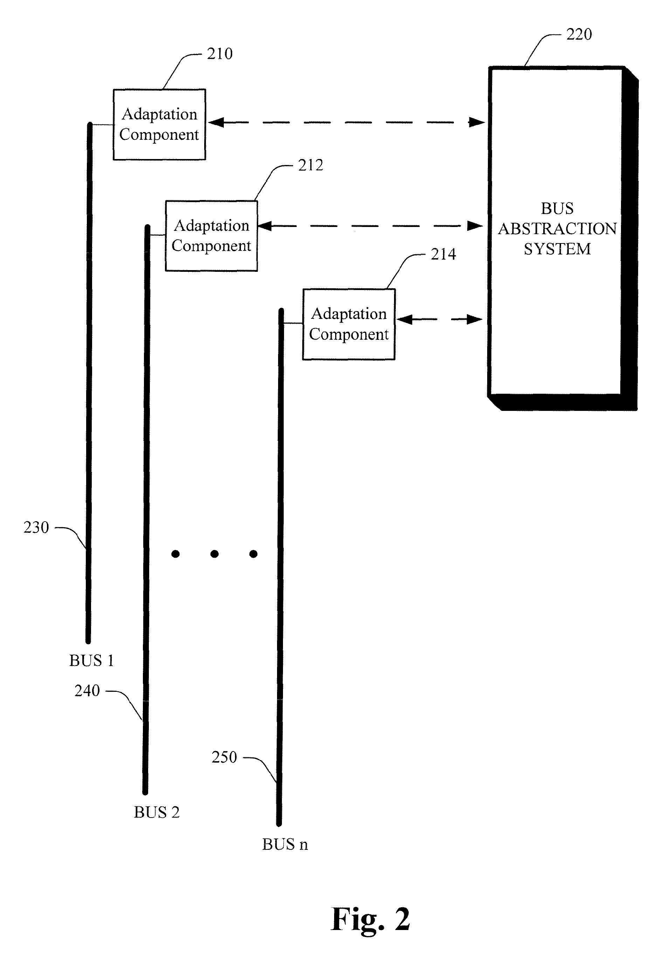

Fig. 2 illustrates a plurality of buses 1 to n (n being an integer) that interact with an abstraction system 220 in accordance with an aspect of the subject invention via adaptation components 210, 212, 214. It is to be appreciated that even though the subject invention is primarily described in context of bus operations, the abstraction system of the subject invention can be positioned over a network, to treat the network as a bus so that devices on networks can employ the same abstraction system 220 for communication.

Such adaptation components 210-214 can enable the plurality of buses to implement the abstraction system 220 of the subject invention, wherein from the application side the bus abstraction system 220 can appear uniform, even though the adaptation components 210-214 can operate differently for a particular bus technology. Such an arrangement can encourage re-use of device models across multiple bus technologies, which can permit leverage of intellectual investment in a single device model across a plurality of bus technologies, such as a message bus, a USB or a IEEE 1394 bus.

Each of the message buses 230, 240, 250 can specialize in transporting messages between applications. For example, each of the message buses can includes a set of agreed - upon message schemas, a set of common command messages and a shared infrastructure for sending bus messages to recipients. Such agreed upon message schemas can be abstracted via the abstraction system 220 to provide a common language between devices that communicate over various applications and buses, between processes of computers and the like. Typically, by employing an abstraction system of the subject invention, an application that sends a message no longer needs to be familiar with a bus technology that is employed for delivering the message to a particular device. Instead, the application merely passes the message via the format provided by the abstraction system 220 to a desired message bus, and the message bus transports the message to all other applications that are listening for bus messages through a shared infrastructure or network.

In a message bus environment, in general, an application that sends a message does not have individual connections to all the applications that must receive the message. Similarly, an application that receives a message takes the message from the message bus. In such environments, internal optimizations, routing, buffering and the underlying transport mechanism can affect how the messages travel to the receiving applications. Additional logic can be incorporated as part of the participating applications. For example, the sending application can insert sequence numbers into the outgoing messages, and the receivers could use those numbers to reorder incoming messages. Typically, an application that sends messages through the bus should prepare the messages, so that messages comply with the type of messages the bus expects.

Likewise, an application that receives messages must be able to understand the message types. The abstraction system 220 of the subject invention provides a single application program interface (API) to send messages over a plurality of different buses, and support a device class, regardless of the bus type or protocol. This represents a programming model under which the abstraction system 220 can appear uniform from an application side, and protocols can evolve without requiring applications to be modified.

Moreover, any of the buses 230, 240, 250 can be an IEEE1394 Driver bus, which is a high performance serial bus that allows addition and/or removal of devices while the device is active. Such bus support an asynchronous as well as isochroous data transfer. For example, for traditional memory-mapped load and store applications, asynchronous transfer can be appropriate, wherein such transfer can provide guaranteed delivery and reliability.

In addition, isochronous data transfer can provide a typically guaranteed data transport at a predetermined rate. This can be important for multimedia applications where uninterrupted transport of time-critical data and just-in-time delivery reduce the need for costly buffering. Moreover, the IEEE1394 bus can include three protocol layers including physical layer, a link layer and a transaction layer. The physical layer can connect to the IEEE1394 connector and provides electrical and mechanical connection between devices. Likewise, the link layer can provide data packet delivery service for asynchronous and isochronous packet delivery.

Also for the IEEE1394 bus, the transaction layer can support the asynchronous protocol write, read and lock commands, wherein a write command sends data from the originator to the receiver, a read command returns the data to the originator and the lock command combines the function of the write and read commands by producing a round trip routing of data between sender and receiver including processing by the receiver. In accordance with the subject invention, typically no change to wire protocols of existing buses is required, as such devices are currently bound to their respective buses, *e.g.*, the invention serves as programming model for the implementation of existing device models. Accordingly, the bus abstraction system 220 can function as a single application program interface to send messages over the plurality of different buses 230, 240, 250, and support a device class, regardless of the bus type or protocol.

It is to be appreciated that although the invention has been described primarily in connection with a USB and IEEE1394 bus, other protocol based bus technologies, such as; Peripheral Component Interface (PCI) Express, Ultrawide Band, Bluetooth and the like can be integrated with the subject invention. Briefly, the PCI Express is a high performance, general purposes I/O interconnect defined for a wide variety of computing and communication platforms. The PCI Express architecture includes three discrete logical layers: the transaction layer, the data link layer and the physical layer. PCI Express uses packets to communicate information between components. Packets are formed in the transaction and data link layers to carry the information from the transmitting component to the receiving component. For memory transaction(s) (*e.g.*, read and/or write), a packet is formed that includes a requester ID (*e.g.*, source identifier), a transaction type (*e.g.*, memory read or memory write) and memory address(es). The requester ID (*e.g.*, source identifier) identifies the device which is the source of a memory transaction. The packet includes additional fields discussion of which is omitted for purposes of brevity. Likewise, in general, Bluetooth is a term used to described the protocol of a short range (*e.g.*, about 10 meters) frequency-hopping radio link between devices to allow wireless connections between the devices. Bluetooth can employ Gaussian frequency shift keying to modulate the data to frequencies around 2.4 GHz and is capable of point-to-point or point-to-multipoint communication. The subject invention can then facilitate, interaction between an application that is unfamiliar with such bus technologies with that bus, and the application can employ the bus and interact therewith, without typically knowing the specifics of the bus technology.

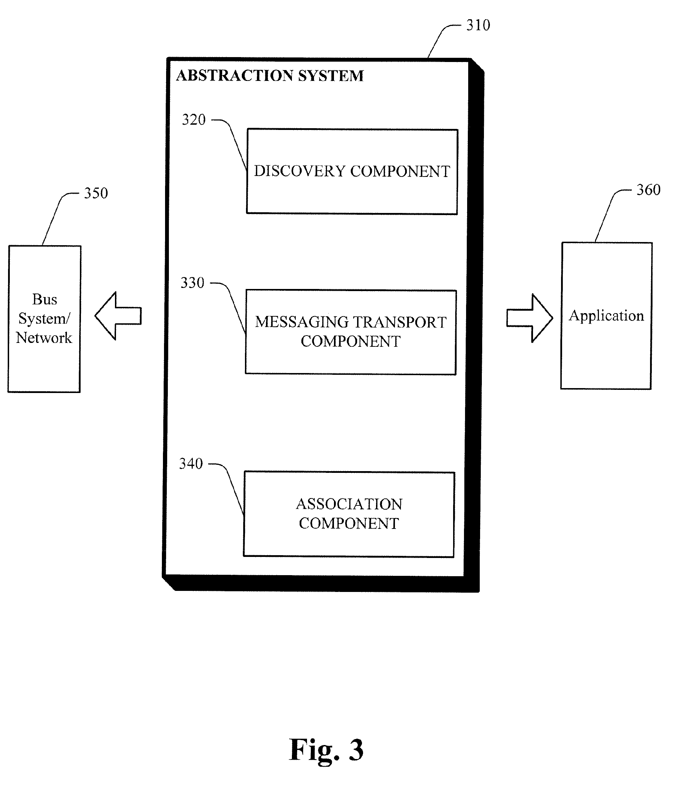

Fig. 3 illustrates various subcomponents associated with the abstraction system that can include semantics for a discovery component, a messaging transport component, and an association component. The discovery component 310 can permit devices attached to a bus and/or network 350 to provide a signaling mechanism for the devices to discover each other. For example, in a distributed system, it is often necessary for an application 360 to discover the identity of participants in a protocol; *e.g.*, a new client needs to determine a set of servers that serve a subject; a new server needs to determine if any clients have pending requests; a replicated sever may need to determine if any clients have pending requests, and the like. Put differently, the discovery component 320 can identify the participants in a bus and/or network 350. For example, it can be required to determine the set of servers that can serve a subject; or a new server can be required to determine if any clients have pending requests. As such, a discovery protocol can be in the form of "who is out there" and the other participants publish "I am", and the other participants describing their state.

Similarly, the messaging transport component 330 can provide for the ability to transfer messages, for example transfer of control messages. Such control messages can be if form of medium priority messages that typically need to be promptly delivered, to accurately control the devices.

In addition, and as illustrated in Fig. 3, the association component 340 can determine a trust and/or relation establishment among various devices of the bus and/or network 350. On a network, when security requirements so require and the physical bus itself is not sufficiently secure, a two way trust can be established via the association component 340 between devices. For example, for a printer device the user needs to be assured of where the print jobs show up and that unauthorized access to the printer is denied. The establishment of such trust can be supplied by the association component 340. For some buses, like the USB, a requirement for such association component can be mitigated as the physical connection or link among various devices proves the required association. For example, the fact that a printer is physically connected to a computer is an affirmative declaration that an association is required between the printer and the computer in the USB environment. Nonetheless, such may not be the case in wireless and IP network environment. The association component can further authenticate devices and/or services by employing credentials previously established, such as challenge response protocol methods or public key infrastructure. Moreover, the messaging transport component can perform encryption to assure privacy of communication, and can be operatively connected to the association component.

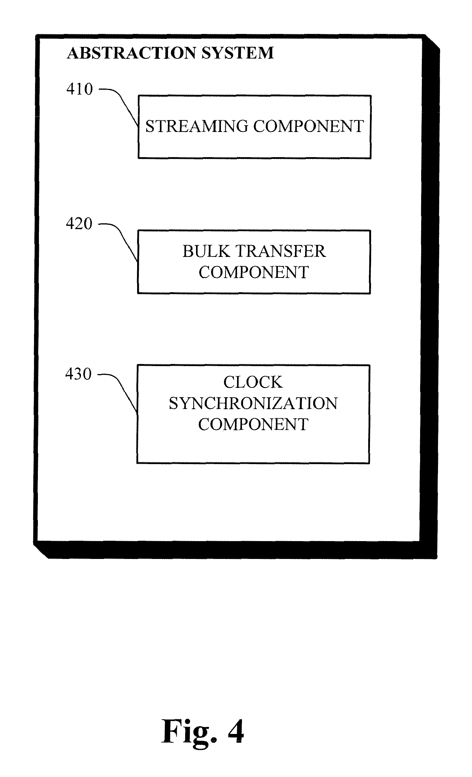

Referring now to Fig. 4 several additional subcomponents associated with the abstraction system are illustrated. In particular, the subject invention can provide semantics for: a streaming component 410, a bulk transfer component 420 and a clock synchronization 430. The streaming component 410 can typically satisfy latency requirements and delivery of time sensitive information in a reliable manner. Typically isochronous transfer can be employed for streaming data that is time-critical and error tolerant or in real-time applications that require a constant data transfer rate, such as an Internet telephony application that is carrying a conversation in real-time.

Moreover, isochronous data in general requires guaranteed amounts of bandwidth and guaranteed maximum transmission times. For example, in an IEEE 1394 bus that is capable of transferring audio and video over the buses a required bandwidth can be reserved for such transfer so that bus is not engaged in other transfer operations, and the data can be transferred without loss. In general, for isochronous transfers, timely data delivery is valued much more than accurate or complete data transfer.

Likewise, the bulk transfer component 420 can facilitate transfer of low priority items and messages without impacting the operation of the messaging transport component and the streaming component. Typically, bulk transfers are used for devices that have large amounts of data to transmit or receive and need guaranteed delivery, but do not have any particular bandwidth or latency requirements, such as Printers and scanners. Even very slow or greatly delayed transfers are in general acceptable for these types of devices, so long as the data is all eventually delivered.

Also, the clock synchronization component 430 can facilitate distribution of high accuracy clock across the bus, for example by employing a respective clock synchronization that each bus naturally implements, so that devices can synchronize or that they have a time base that will be shared with respect to that bus. Typically, various buses apply bus synchronizations in different manner and based on type of messaging being transferred there can be a very high quality clock that is well synchronized between the devices and the computer. For example, if there exists a rapid trade off access on the bus, and it is done in regular intervals, then such intervals can be employed for clock synchronization. The subject invention can leverage the existing synchronization capabilities, for example the high clock synchronization capabilities of an IEEE1394 bus.

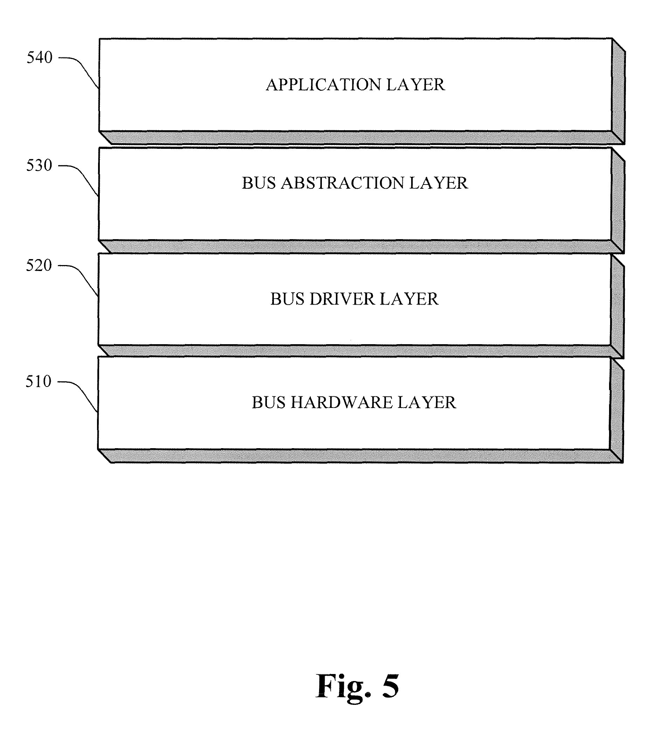

Fig. 5 illustrates a particular layering arrangement in accordance with an aspect of the subject invention. As illustrated, a hardware layer 510 can form a base of the layering arrangement with a bus driver layer 520 positioned thereover. The bus driver 520 can be specific to a bus type, and can be positioned below the bus abstraction layer 530. An application layer 540 can be positioned over the bus abstraction layer 530. As such, the bus abstraction of the subject invention when applied to driver models can allow for a unification of between protocol buses and load/store buses (*e.g.*, CPI). Accordingly, device class support can be shared among, load/store buses, protocol buses and internet protocol (IP). Thus, a single application program interface (API) can be provided to send messages over a plurality of different buses, and support a device class, regardless of the bus type or protocol.

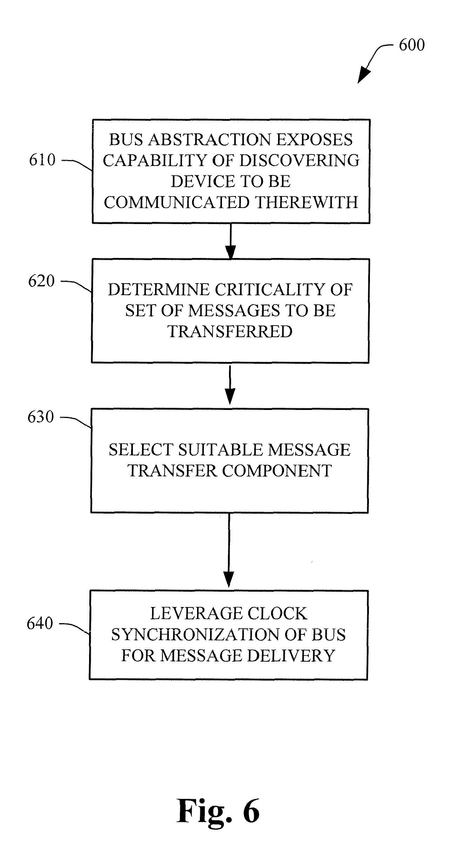

Fig. 6 illustrates a methodology 600 of bus abstraction in accordance with an aspect of the subject invention. The methodology begins at 610, wherein the bus abstraction exposes a capability of discovering a device to be communicated with, by an application. For example a string can employed as part of addressing the device or parts thereof. Next and at 620, a determination can be made as to the criticality of the set of commands (*e.g.*, the application can explicitly request bulk transfer, streaming and the like), which need to be communicated with the devices or parts thereof. At 630, a proper messaging transport component, such as message transfer, or streaming or bulk transfer, as described in detail *supra* can be selected to transfer the messages to the device or parts thereof. Next, based on such selection and at 640, a clock synchronization feature of selected bus can be leveraged for proper delivery of message to desired addresses. Such an arrangement can encourage re-use of device models across multiple bus technologies, which in turn can permit leverage of intellectual investment in a single device model across a plurality of bus technologies. Thus, from an application side the bus abstraction can appear uniform regardless of bus technology or network.

While the exemplary method is illustrated and described herein as a series of blocks representative of various events and/or acts, the present invention is not limited by the illustrated ordering of such blocks. For instance, some acts or events may occur in different orders and/or concurrently with other acts or events, apart from the ordering illustrated herein, in accordance with the invention. In addition, not all illustrated blocks, events or acts, may be required to implement a methodology in accordance with the present invention. Moreover, it will be appreciated that the exemplary method and other methods according to the invention may be implemented in association with the method illustrated and described herein, as well as in association with other systems and apparatus not illustrated or described.

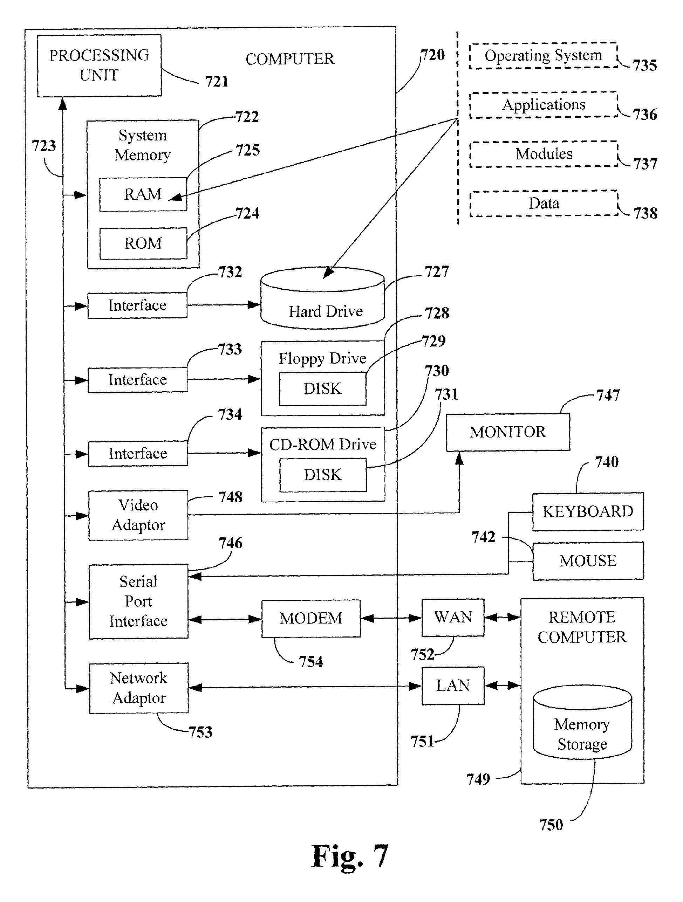

Referring now to Fig. 7, a brief, general description of a suitable computing environment is illustrated wherein the various aspects of the subject invention can be implemented. While the invention has been described above in the general context of computer-executable instructions of a computer program that runs on a computer and/or computers, those skilled in the art will recognize that the invention can also be implemented in combination with other program modules. Generally, program modules include routines, programs, components, data structures, etc. that perform particular tasks and/or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like. As explained earlier, the illustrated aspects of the invention can also be practiced in distributed computing environments where tasks are performed by remote processing devices that are linked through a communications network. However, some, if not all aspects of the invention can be practiced on stand-alone computers. In a distributed computing environment, program modules can be located in both local and remote memory storage devices. The exemplary environment includes a computer 720, including a processing unit 721, a system memory 722, and a system bus 723 that couples various system components including the system memory to the processing unit 721. The processing unit 721 can be any of various commercially available processors. Dual microprocessors and other multi-processor architectures also can be used as the processing unit 721.

The system bus can be any of several types of bus structure including a USB, IEEE1394, a peripheral bus, and a local bus using any of a variety of commercially available bus architectures. The system memory may include read only memory (ROM) 724 and random access memory (RAM) 725. A basic input/output system (BIOS), containing the basic routines that help to transfer information between elements within the computer 720, such as during start-up, is stored in ROM 724.

The computer 720 further includes a hard disk drive 727, a magnetic disk drive 728, *e.g.,* to read from or write to a removable disk 729, and an optical disk drive 730, *e.g.*, for reading from or writing to a CD-ROM disk 731 or to read from or write to other optical media. The hard disk drive 727, magnetic disk drive 728, and optical disk drive 730 are connected to the system bus 723 by a hard disk drive interface 732, a magnetic disk drive interface 733, and an optical drive interface 734, respectively. The drives and their associated computer-readable media provide nonvolatile storage of data, data structures, computer-executable instructions, etc. for the computer 720. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, can also be used in the exemplary operating environment, and further that any such media may contain computer-executable instructions for performing the methods of the subject invention.

A number of program modules can be stored in the drives and RAM 725, including an operating system 735, one or more application programs 736, other program modules 737, and program data 738. The operating system 735 in the illustrated computer can be substantially any commercially available operating system.

A user can enter commands and information into the computer 720 through a keyboard 740 and a pointing device, such as a mouse 742. Other input devices (not shown) can include a microphone, a joystick, a game pad, a satellite dish, a scanner, or the like. These and other input devices are often connected to the processing unit 721 through a serial port interface 746 that is coupled to the system bus, but may be connected by other interfaces, such as a parallel port, a game port or a universal serial bus (USB). A monitor 747 or other type of display device is also connected to the system bus 723 *via* an interface, such as a video adapter 748. In addition to the monitor, computers typically include other peripheral output devices (not shown), such as speakers and printers.

The computer 720 can operate in a networked environment using logical connections to one or more remote computers, such as a remote computer 747. The remote computer 749 may be a workstation, a server computer, a router, a peer device or other common network node, and typically includes many or all of the elements described relative to the computer 720, although only a memory storage device 750 is illustrated in Fig. 7. The logical connections depicted in Fig. 7 may include a local area network (LAN) 751 and a wide area network (WAN) 752. Such networking environments are commonplace in offices, enterprise-wide computer networks, Intranets and the Internet.

When employed in a LAN networking environment, the computer 720 can be connected to the local network 751 through a network interface or adapter 753. When utilized in a WAN networking environment, the computer 720 generally can include a modem 754, and/or is connected to a communications server on the LAN, and/or has other means for establishing communications over the wide area network 752, such as the Internet. The modem 754, which can be internal or external, can be connected to the system bus 723 *via* the serial port interface 746. In a networked environment, program modules depicted relative to the computer 720, or portions thereof, can be stored in the remote memory storage device. It will be appreciated that the network connections shown are exemplary and other means of establishing a communications link between the computers can be employed.

In accordance with the practices of persons skilled in the art of computer programming, the subject invention has been described with reference to acts and symbolic representations of operations that are performed by a computer, such as the computer 720, unless otherwise indicated. Such acts and operations are sometimes referred to as being computer-executed. It will be appreciated that the acts and symbolically represented operations include the manipulation by the processing unit 721 of electrical signals representing data bits which causes a resulting transformation or reduction of the electrical signal representation, and the maintenance of data bits at memory locations in the memory system (including the system memory 722, hard drive 727, floppy disks 728, and CD-ROM 731) to thereby reconfigure or otherwise alter the computer system's operation, as well as other processing of signals. The memory locations wherein such data bits are maintained are physical locations that have particular electrical, magnetic, or optical properties corresponding to the data bits.

Although the invention has been shown and described with respect to certain illustrated aspects, it will be appreciated that equivalent alterations and modifications will occur to others skilled in the art upon the reading and understanding of this specification and the annexed drawings. In particular regard to the various functions performed by the above described components (assemblies, devices, circuits, systems, etc.), the terms (including a reference to a "means") used to describe such components are intended to correspond, unless otherwise indicated, to any component which performs the specified function of the described component (e.g., that is functionally equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention. Furthermore, to the extent that the terms "includes", "including", "has", "having", and variants thereof are used in either the detailed description or the claims, these terms are intended to be inclusive in a manner similar to the term "comprising."

## Claims

1. A system that facilitates unification of bus protocols or networks comprising:
an abstraction system that binds device models and higher level protocols to multiple bus implementations or networks, the abstraction system comprising:
a discovery component that provides a signaling mechanism for the devices to discover each other; and
a messaging transport component that transport control messages for control of the devices.

2. The system of claim 1, the abstraction system further comprises an association component that at least one of facilitates determination of a trust established among the devices and authenticates the devices or services by employing credentials previously established.

3. The system of claim 1, the abstraction system further comprises a streaming component that facilitates delivery of time sensitive information among the devices.

4. The system of claim 1, the abstraction system further comprises a bulk transfer component that facilitates delivery of low priority items.

5. The system of claim 1, the abstraction system enables an application unfamiliar with a bus to employ the bus.

6. The system of claim 1, the bus abstraction system supplies a single application program interface over a plurality of different buses.

7. The system of claim 1, the bus abstraction system facilitates sharing of device class support among protocol buses and internet protocol.

8. The system of claim 1, further comprising an adaptation component as part of a bus, the adaptation component interacts with the abstraction system.

9. The system of claim 1, the bus abstraction system re-uses device models across multiple bus technologies.

10. A method of unifying bus protocols, comprising:
binding device models and higher level protocols to multiple bus implementations or networks via an abstraction system, and
discovering a device that a message thereto is to be transferred.

11. The method of claim 10 further comprising employing a streaming component for transfer of time sensitive information.

12. The method of claim 10 further comprising employing a bulk transfer component for transfer of the message.

13. The method of claim 10 further comprising transferring the message in an at least one of an asynchronous and isochronous manner.

14. A computer readable medium having stored thereon computer executable instructions for carrying out the method of claim 10.

15. A computer-readable medium having stored thereon a data structure comprising:
a computer executable component that binds device models and higher level protocols to a plurality of buses with different bus technologies, to enable applications unfamiliar with specifics of the different bus technologies to use the plurality of buses, the computer executable component comprising a further computer executable component that provides a signaling mechanism for the applications and devices to discover each other on the plurality of buses.

16. The computer-readable medium of claim 15, the computer executable component comprising an additional computer executable component that facilitates determination of a trust established among the devices.

17. The computer-readable medium of claim 15, the computer executable component comprising another computer executable component that facilitates delivery of time sensitive information among the devices.

18. The computer-readable medium of claim 15, the computer executable component facilitates sharing of device class support among protocol buses and internet protocol.

19. The computer-readable medium of claim 15, the computer executable component re-uses device models across multiple bus technologies.

20. The computer-readable medium of claim 15, the computer executable component with an addressing scheme that provides a standard way for applications to refer to devices on the plurality of buses.
